# EUROPÄISCHE PATENTSCHRIFT

(11) **EP 3 736 143 B1**
(45) Veröffentlichungstag und Bekanntmachung des Hinweises auf die Patenterteilung: **13.05.2026**
(21) Anmeldenummer: 20163469.8
(22) Anmeldetag: 17.03.2020
(51) Int. Cl.: B60C 23/04, H02N 1/04, B60C 19/00

(54) **REIFEN MIT EINER VORRICHTUNG UMFASSEND EINE ELEKTRODENSCHICHT UND EINE KAUTSCHUKSCHICHT SOWIE DIE VERWENDUNG DES REIFENS UND DER VORRICHTUNG IN EINEM REIFEN**
TYRE WITH A DEVICE COMPRISING AN ELECTRODE LAYER AND A RUBBER LAYER AND THE USE OF THE TYRE AND THE DEVICE IN A TYRE
PNEU DOTÉ D'UN DISPOSITIF COMPRENANT UNE COUCHE D'ÉLECTRODE ET UNE COUCHE DE CAOUTCHOUC, AINSI QU'UTILISATION DU PNEU ET DU DISPOSITIF DANS UN PNEU

(30) Priorität: 03.05.2019 DE 102019003133
(43) Veröffentlichungstag der Anmeldung: 11.11.2020
(73) Patentinhaber: Continental Reifen Deutschland GmbH, 30175 Hannover (DE)
(72) Erfinder: Das, Amit - c/o Leibniz-Institut für Polymerforschung Dresden e.V., 01069 Dresden (DE); Finger, Sebastian - c/o Continental AG, 30419 Hannover (DE); Lacayo-Pineda, Jorge - c/o Continental AG, 30419 Hannover (DE); Natarajan, Tamil - c/o Leibniz-Institut für Polymerforschung Dresden e.V., 01069 Dresden (DE)
(74) Vertreter: Continental Corporation

(56) Entgegenhaltungen:
- CN-A- 106 961 228
- CN-A- 109 304 991
- KR-A- 20190 010 966

## Beschreibung

Die Erfindung betrifft einen Reifen umfassend eine Vorrichtung, wobei die Vorrichtung eine Elektrodenschicht und eine Kautschukschicht umfasst. Die Erfindung betrifft auch die Verwendung der Vorrichtung in einem Reifen oder die Verwendung des Reifens.

Sensoren spielen in der heutigen Automobilindustrie eine immer größere Rolle. Sie können helfen die Materialeigenschaften bei der Herstellung oder auch während des Gebrauchs verschiedener Autoteile wie beispielsweise beim Einsatz von Reifen zu überwachen.

Beim Messen von Reifeneigenschaften während des Fahrens ist es oft notwendig, die Sensoren an verschiedenen Stellen am Rad oder am Reifen anzubringen, um die Änderungen der Materialeigenschaften oder einwirkende Kräfte direkt an Ort und Stelle zu messen. Dabei spielt auch die Größe und der Anbringungsort der Sensoren eine Rolle, welche möglichst vorteilhaft ausfallen sollte, damit das Anbringen des Sensors keine zusätzlichen Probleme mit sich bringt, z.B. der Rollwiderstand nicht zu sehr erhöht wird.

Des Weiteren müssen Sensoren am Rad oder Reifen häufig mithilfe einer Stromquelle betrieben werden. Die Verbindung mit der Stromquelle und das Anbringen der Stromquelle an einer geeigneten Stelle erschweren die Installation eines Sensors an einer vorgesehenen Stelle zusätzlich.

Im Stand der Technik ist aus der DE 10200603769 A1 ein "Schaltungsmodul, das mindestens aufweist: ein Substrat (2a, 2b; 102a, 102b), auf oder in dem mindestens ein Bauelement (6, 11, 12, 13) angebracht ist, ein Piezo-Element (3), das mindestens einen Einspannbereich (3a, 3b) und mindestens einen Schwingbereich (3b, 3a) aufweist, wobei das Piezo-Element (3) in seinem Einspannbereich (3a, 3b) an dem Substrat (2a, 2b; 102a, 102b) oder einem an dem Substrat befestigten Mittel eingespannt ist und der mindestens eine Schwingbereich (3b, 3a) schwingfähig aufgenommen ist, an dem Piezo-Element (3) vorgesehene Kontaktierungen (10) zur Abnahme einer Piezo-Spannung (Up), und eine Stromversorgungsschaltung (12, 13), die die von dem Piezo-Element (3) erzeugte Piezo-Spannung (Up) aufnimmt und als Spannungsquelle zur Stromversorgung des Schaltungsmoduls (1, 101) dient" bekannt (s. Anspruch 1).

Die CN106961228A offenbart einen multifunktionalen, Reibungskraft erzeugenden Reifen, einen darauf basierenden Sensor sowie eine Stromversorgungseinrichtung und gehört zum Technologiebereich der Reibungskraftgeneratoren. Der Stromerzeugungsreifen besteht aus einem Reifenkörper und einem leitfähigen Schichtelement.

Ferner offenbart die KR20190010966A einen triboelektrischen Generator, der autonom elektrische Energie erzeugen kann. Gemäß einer Ausführungsform umfasst der triboelektrische Generator ein erstes geladenes Material mit einer Vielzahl von Poren, deren Form durch eine externe Kraft verändert wird, eine in das erste geladene Material eingefügte Isolierschicht, ein zweites geladenes Material, das von der Isolierschicht umgeben ist und eine Verdrahtungseinheit, die das erste geladene Material und das zweite geladene Material verbindet.

Ferner offenbart die CN109304991A ein drahtloses Reifendrucküberwachungssystem umfasst Reibungs-Nanometer-Stromgeneratoren und eine drahtlose Reifendrucküberwachungseinheit, wobei die Reibungs-Nanometer-Stromgeneratoren zwischen einem Innenschlauch und einer Außenhülle eines Reifens angeordnet sind.Eine Aufgabe, die der Erfindung zugrunde liegt, besteht darin, einen Reifen bereitzustellen, der eine Vorrichtung umfasst, die am Reifen oder am Rad angebrachten Energiespeicher zum Betreiben verschiedener Sensoren aufladen kann. Diese Vorrichtung sollte ein integraler Teil des Reifens sein und kein zusätzlich eingebrachtes Modul und/oder die Ladegeschwindigkeit zum Aufladen des angebrachten Energiespeicher zum Betreiben verschiedener Sensoren verbessern. Eine weitere Aufgabe war es, die im Reifen erzeugte Spannung zum Aufladen eines Energiespeichers zu erhöhen.

Gelöst wird diese Aufgabe erfindungsgemäß durch einen Reifen mit den Merkmalen des Anspruchs 1.

Die Erfindung betrifft auch die Verwendung eines Reifens gemäß Anspruch 13.

Bevorzugte Ausgestaltungen des erfindungsgemäßen Reifens sind Bestandteil abhängiger Ansprüche.

Im Rahmen der vorliegenden Erfindung ist ein erfindungsgemäßer Reifen bevorzugt ein Fahrzeugreifen, besonders bevorzugt ein Fahrzeugluftreifen. Zudem kann ein erfindungsgemäßer Reifen auch mehrere Vorrichtungen wie vorstehend oder wie nachstehend beschrieben umfassen, um vorteilhafterweise mehrere Stellen im Reifen als Spannungsquelle zu nutzen.

Es war eine große Leistung der vorliegenden Erfindung herausgefunden zu haben, dass durch die Anordnung einer elektrisch leitenden Schicht radial innerhalb einer elektrisch nicht-leitenden Kautschukschicht, wobei letztere mit der Straßenoberfläche in Kontakt tritt, Energiespeicher innerhalb eines Reifens aufgeladen werden können. Ohne an eine wissenschaftliche Theorie gebunden sein zu wollen, scheint die vorliegende Erfindung auf triboelektrischen Effekten und nicht auf piezo-elektrischen Effekten zu beruhen. Es wird davon ausgegangen, dass durch das periodische Zusammenquetschen der Elektrodenschicht und der Kautschukschicht an der Bodenaufstandsfläche eines rollenden erfindungsgemäßen Reifens eine Spannungsänderung im Elektrodenmaterial auftritt, welche beim Verlassen der Bodenaufstandsfläche des erfindungsgemäßen Reifens wieder zurückgeht. Es ist eine große Leistung der vorliegenden Erfindung erkannt zu haben, dass diese periodische Spannungsänderung als Wechselstromquelle und mit einer entsprechenden Schaltung, wie beispielsweise einer Grätz-Schaltung, auch als Gleichstromquelle verwendet werden kann.

Insbesondere so überraschend ist hierbei, dass eine Vorrichtung auf Basis dieses Prinzips in einem Reifen integriert werden kann, ohne dass zusätzliche in Umfangsrichtung verlaufende Schichten in den Reifen integriert werden müssen.

Soweit nichts anderes angegeben ist, bezieht sich der Ausdruck "Spannung zwischen den Schichten" immer auf die Spannung, die zwischen der Elektrodenschicht und der Kautschukschicht einer Vorrichtung eines erfindungsgemäßen Reifens vorliegt.

Im Rahmen der vorliegenden Erfindung bedeutet der Ausdruck "übereinander angeordnet" insbesondere, dass die beiden Schichten in radialer Richtung beziehungsweise in axialer Richtung aufeinander folgen, wobei die Kontaktfläche zwischen den beiden Schichten hauptsächlich senkrecht zur radialen Richtung beziehungsweise zur axialen Richtung des Reifens verläuft.

Im Rahmen der vorliegenden Erfindung ist die Bodenkontaktfläche eines Reifens bevorzugt die Oberfläche der Kautschukschicht des Laufstreifens des Reifens, die bei einem regulären Abrollen des Reifens in unmittelbarem Kontakt mit dem Boden, besonders bevorzugt mit der Fahrbahn steht, sodass es sich um eine Bodenkontaktfläche bzw. Fahrbahnkontaktfläche handelt. Bevorzugt erstreckt sich die Kautschukschicht einer Vorrichtung eines erfindungsgemäßen Reifens in axiale Richtung des Reifens entlang der gesamten Boden Kontaktfläche. Auch bevorzugt erstreckt sich die Kautschukschicht einer Vorrichtung eines erfindungsgemäßen Reifens in Umfangsrichtung des Reifens entlang der gesamten Boden Kontaktfläche, d.h. vollumfänglich um den gesamten erfindungsmäßen Reifen.

Bevorzugt ist ein Reifen mit einer Vorrichtung wie vorstehend beschrieben oder wie vorstehend als bevorzugt beschrieben, wobei die Differenz zwischen der spezifischen triboelektrischen Affinität der Kautschukschicht und der spezifischen triboelektrischen Affinität von Bitumen nach DIN EN 12597 als Beispiel für die Asphaltdeckschicht bei mindestens 20 nC/J liegt, bevorzugt bei mindestens 40 nC/J, besonders bevorzugt bei mindestens 60 nC/J, gemessen bei 20°C und bei 35% relativer Luftfeuchtigkeit. Anstelle von Bitumen nach DIN EN 12597 könnte auch ein Asphaltmischgut nach DIN EN 13108-1 eingesetzt werden.

Ein Vorteil des vorstehend beschriebenen Aspekts der vorliegenden Erfindung ist, dass eine ausreichend große Differenz in Bezug auf die spezifische triboelektrische Affinität im Vergleich zur Straßenoberfläche aufweisen und somit bei Kontakt der Straßenoberfläche mit der Kautschukschicht des erfindungsgemäßen Reifen im zweiten Zustand besonders viele Elektronen übertragen können.

Die Messung der spezifischen triboelektrischen Affinität eines Zwischenmaterials wurde im Rahmen der vorigen Erfindung bei Atmosphärendruck und 22°C durchgeführt. Eine aus einem Zwischenmaterial bestehende Probe mit einer Fläche von 1cm x 1cm, im folgenden Zwischenmaterialprobe genannt, und Referenzprobe aus Acrylnitril-Butadien-Kautschuk und mit einer Fläche von 1cm x 2cm wurden bereitgestellt. Die Referenzprobe wurde auf einen Kupferkontakt mit einer gleichen Fläche von 1cm x 2cm flächendeckend befestigt. Die Zwischenmaterialprobe und die Referenzprobe wurden mit einem "7006 AC GEN4 Ionizing Bar" der Fa. Exair elektrostatisch neutralisiert. Anschließend wurden die Zwischenmaterialprobe an einem Ende der Referenzprobe mit einer Fläche von 1cm x 2cm flächendeckend aufeinandergelegt. Anschließend wurden die Probenmaterialien mit der aufeinander liegenden Fläche von 1 cm² mit einer Kraft von 0,1 N Kante an Kante aufeinandergedrückt und während der Anwendung dieser Kraft wurde die Zwischenmaterialprobe von einem Ende der Referenzprobe zum anderen Ende der Referenzprobe gezogen, sodass sie dabei eine Strecke von 1 cm zurücklegte. Die entstandene Spannung zwischen der Zwischenmaterialprobe und der Referenz wurde nach ausreichendem Trennen der Zwischenmaterialprobe und der Referenzprobe mittels eines AlphLab Surface DC Voltmeter SVM2 der Firma "AlphaLab Inc." und Anbringen der Zwischenmaterialprobe auf einem entsprechenden Kupferkontakt mit einer gleichen Fläche von 1cm x 1cm ermittelt. Der Kehrwert des so ermittelten Spannungswerts zwischen den beiden Kontakten ergibt die vorstehend beschriebene spezifische triboelektrische Affinität des untersuchten Zwischenmaterials.

Bevorzugt ist ein erfindungsgemäßer Reifen wie vorstehend beschrieben oder wie vorstehend als bevorzugt beschrieben, wobei die Vorrichtung eine erste und eine zweite Elektrodenschicht sowie eine erste und eine zweite Kautschukschicht aufweist, wobei
- die erste Elektrodenschicht und die erste Kautschukschicht im Laufstreifen übereinander angeordnet sind
- die zweite Elektrodenschicht und die zweite Kautschukschicht im Wulstbereich übereinander angeordnet sind,
- die der ersten Elektrodenschicht gegenüberliegenden Oberfläche der ersten Kautschukschicht zumindest einen Teil der Bodenkontaktfläche
   und
- die der zweiten Elektrodenschicht gegenüberliegenden Oberfläche der zweiten Kautschukschicht zumindest einen Teil der Felgenaufstandsfläche des Reifens umfasst.

Bevorzugt ist ein erfindungsgemäßer Reifen wie vorstehend beschrieben oder wie vorstehend als bevorzugt beschrieben, wobei die Vorrichtung dazu geeignet ist,
- mindestens einen Energiespeicher, wie eine Batterie oder einen Akkumulator aufzuladen, wobei der eine Energiespeicher an dem Reifen oder an einer Felge zum Aufziehen des Reifens angebracht werden kann,
   und/oder
- die Vorrichtung dazu ausgelegt ist, eine elektrische Spannung zwischen den Schichten durch Variation des Druckes auf die Schichten zu erzeugen.

Ein Vorteil des vorstehend beschriebenen Aspekts der vorliegenden Erfindung ist, dass eine am Reifen oder am Rad umfassend den Reifen befestigte Batterie geladen werden kann und somit als Stromversorger für im Reifen befindliche Sensoren dienen kann. Somit ist eine externe Stromversorgung, welche nicht mit dem Reifen oder dem Rad mit rotiert nicht möglich. Dies ist ein langersehntes Bedürfnis im Stand der Technik.

Bevorzugt ist ein erfindungsgemäßer Reifen wie vorstehend beschrieben oder wie vorstehend als bevorzugt beschrieben, wobei der Reifen abgesehen von der Elektrodenschicht ausschließlich Schichten mit einer elektrischen Leitfähigkeit von weniger als 0,0001 S/m bei 20 °C umfasst, bevorzugt ausschließlich Schichten mit einer elektrischen Leitfähigkeit von weniger als 0,00001 S/m bei 20 °C.

Bevorzugt ist ein erfindungsgemäßer Reifen wie vorstehend beschrieben oder wie vorstehend als bevorzugt beschrieben, wobei die Elektrodenschicht des Reifens eine elektrischen Leitfähigkeit von mehr als 0,01 S/m bei 20 °C oder im Bereich von 0,01 S/m bis 100 000 S/m bei 20 °C aufweist, bevorzugt ausschließlich Schichten mit einer elektrischen Leitfähigkeit von mehr als 0,1 S/m bei 20 °C oder im Bereich von 0,1 S/m bis 10 000 S/m bei 20 °C.

Bevorzugt ist ein erfindungsgemäßer Reifen wie vorstehend beschrieben oder wie vorstehend als bevorzugt beschrieben, wobei die Elektrodenschicht unmittelbar auf der Kautschukschicht angebracht ist und/oder keine weitere Schicht zwischen der Elektrodenschicht und Kautschukschicht vorliegt.

Bevorzugt ist ein erfindungsgemäßer Reifen wie vorstehend beschrieben oder wie vorstehend als bevorzugt beschrieben, wobei der Kautschuk der Kautschukschicht eine relative Permittivität im Bereich von 1 bis 5 aufweist, bevorzugt im Bereich von 2,25 bis 4, besonders bevorzugt von 2,44 bis 3,5, insbesondere ganz besonders bevorzug im Bereich von 2,45 bis 3, in besonders hohem Maße bevorzugt im Bereich von 2,47 bis 2,80, gemessen bei 60 °C und einer Frequenz von 10 Hz.

Ein Vorteil des vorstehend beschriebenen Aspekts der vorliegenden Erfindung ist, dass eine Vorrichtung eines erfindungsgemäßen Reifens mehr Energie pro Umdrehung des Reifens liefert, wenn der Kautschuk der Kautschukschicht eines erfindungsmäßen Reifens eine höhere Permittivität aufweist. Dies ist nachstehend für verschiedene Kautschukarten mit experimentellen Daten belegt.

Bevorzugt ist ein erfindungsgemäßer Reifen wie vorstehend beschrieben oder wie vorstehend als bevorzugt beschrieben, wobei die der Elektrodenschicht gegenüberliegenden Oberfläche der Kautschukschicht vollumfänglich hauptsächlich die Bodenkontaktfläche oder vollumfänglich die gesamte Bodenkontaktfläche des Reifens bildet und/oder die Elektrodenschicht in mindestens zwei, bevorzugt vier, voneinander elektrisch isolierte Elektrodenschichtabschnitte umfasst.

Ein Vorteil des vorstehend beschriebenen Aspekts der vorliegenden Erfindung ist, dass wenn die Kautschukschicht einen erfindungsgemäßen Reifen vollumfänglich umgibt zu jedem Zeitpunkt des Rollens des erfindungsgemäßen Reifens Ladungen verschoben werden und somit eine entsprechende Spannung mittels einer Vorrichtung eines erfindungsgemäßen Reifens erzeugt. Auf diese Weise kann eine höhere Stromstärke pro Umdrehung eines erfindungsgemäßen Reifens erzeugt werden. Der Effekt des vorstehend beschriebenen Aspekts der vorliegenden Erfindung wird zudem weiter erhöht, wenn an der radial inneren Oberfläche der vollumfänglichen Kautschukschicht mehrere voneinander elektrisch isolierte Elektrodenschichtabschnitte vorhanden sind, wobei der jeweils an der Bodenaufstandsfläche eines rollenden erfindungsgemäßen Reifens befindliche Elektrodenschichtabschnitt andere elektrische Spannung im Vergleich zu den übrigen Elektrodenabschnitten aufweist. Der so entstehende Spannungsunterschied zwischen den unterschiedlichen Elektrodenschichtabschnitten kann in einem erfindungsgemäßen Reifen als Wechselstromquelle verwendet werden.

Bevorzugt ist ein erfindungsgemäßer Reifen wie vorstehend beschrieben oder wie vorstehend als bevorzugt beschrieben, wobei die Elektrodenschicht oder jeder Elektrodenschichtabschnitt der Vorrichtung eine Stromversorgungsschaltung zur Verbindung mit den Kontaktierungen zur Abnahme einer zwischen den Schichten vorliegenden elektrischen Spannung aufweist, wobei die Stromversorgungsschaltung
- die zwischen den Schichten erzeugte elektrische Spannung aufnehmen kann
   und
- eine Gleichrichtereinheit bestehend aus einem Gleichrichter mit einem Energiespeicher zur Zwischenspeicherung der Energie der zwischen den Schichten vorliegenden elektrischen Spannung aufweist, bevorzugt ist der Gleichrichter hierbei ein Einweg-Gleichrichter.

Ein Vorteil des vorstehend beschriebenen Aspekts der vorliegenden Erfindung ist, dass die durch die Ladungsverschiebung gewonnene Energie gespeichert werden kann ohne zusätzliche Energie für die Ladungssteuerung aufwenden zu müssen.

Bevorzugt ist ein erfindungsgemäßer Reifen wie vorstehend beschrieben oder wie vorstehend als bevorzugt beschrieben, wobei die Elektrodenschicht oder jeder Elektrodenschichtabschnitt der Vorrichtung eine Stromversorgungsschaltung zur Verbindung mit den Kontaktierungen zur Abnahme einer zwischen den Schichten vorliegenden elektrischen Spannung aufweist, wobei die Stromversorgungsschaltung
- die zwischen den Schichten erzeugte elektrische Spannung aufnehmen kann und
- eine Gleichrichtereinheit, bevorzugt eine Gleichrichtereinheit bestehend aus einem Zweiweg-Gleichrichter mit einer Erdung und mit einem Energiespeicher zur Zwischenspeicherung der Energie der zwischen den Schichten vorliegenden elektrischen Spannung, aufweist.

Ein Vorteil des vorstehend beschriebenen Aspekts der vorliegenden Erfindung ist, dass jeder einzelne Elektrodenschichtabschnitt für sich als Wechselstromquelle genutzt werden kann.

Bevorzugt ist ein erfindungsgemäßer Reifen wie vorstehend beschrieben oder wie vorstehend als bevorzugt beschrieben, wobei je zwei gegenüberliegende Elektrodenschichtabschnitte der Vorrichtung über eine Stromversorgungsschaltung zur Verbindung mit den Kontaktierungen zur Abnahme einer zwischen den Schichten vorliegenden elektrischen Spannung aufweist, wobei die Stromversorgungsschaltung
- die zwischen den Schichten erzeugte elektrische Spannung aufnehmen kann und
- eine Gleichrichtereinheit, bevorzugt eine Gleichrichtereinheit bestehend aus einem die zwei besagten Elektrodenschichtabschnitte verbindenden Zweiweg-Gleichrichter mit einem Energiespeicher zur Zwischenspeicherung der Energie der zwischen den Schichten vorliegenden elektrischen Spannung, aufweist.

Ein Vorteil des vorstehend beschriebenen Aspekts der vorliegenden Erfindung ist, dass die maximal erzeugbare Spannung in der Vorrichtung eines erfindungsgemäßen Reifens unabhängig von der Erdung ist, also unabhängig von dem Spannungspotenzial der Bodenkontaktfläche, auf der ein erfindungsgemäßer Reifen eingesetzt wird. Hierbei werden je zwei gegenüberliegende Elektrodenschichtabschnitte als eine Wechselstromquelle genutzt. Durch das kontaktieren zwei gegenüberliegende Elektrodenschichtabschnitte in einem erfindungsmäßen Reifen wird die erzeugte Spannung maximiert.

Bevorzugt ist ein erfindungsgemäßer Reifen wie vorstehend beschrieben oder wie vorstehend als bevorzugt beschrieben, wobei das Elektrodenmaterial der Elektrodenschicht aus einem festen Material besteht, wobei das feste Material eine Verbindung umfasst ausgesucht aus der Gruppe bestehend aus Metall, Keramik, Legierungen und Kautschuk, wobei Metall und Kautschuk bevorzugt sind, wobei als Metall Kupfer und Aluminium und als Kautschuk die Kautschuke NR, IR, ENR, BR, SBR, SSBR, PDMS, ESBR und Epichlorohydrin besonders bevorzugt sind.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

In dem erfindungsgemäßem Reifen wie vorstehend beschrieben oder wie vorstehend als bevorzugt beschrieben, weist das Elektrodenmaterial der Elektrodenschicht oder der Elektrodenschichtabschnitte einen Kautschuk auf umfassend NR, IR, ENR, BR, SBR, SSBR, PDMS, ESBR und Epichlorohydrin oder deren Mischungen und mindestens einen Füllstoff, wobei der eine Füllstoff Ruß ist.

Im Rahmen der vorliegenden Erfindung umfasst der Ausdruck Ruß insbesondere auch Graphen und Kohlenstoffnanoröhren (CNT).

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

Bevorzugt ist ein erfindungsgemäßer Reifen wie vorstehend beschrieben oder wie vorstehend als bevorzugt beschrieben, wobei der mindestens eine Füllstoff in der Elektrodenschicht oder in einem oder jedem Elektrodenabschnitt in einer Gesamtmenge im Bereich von 1 phr bis 200 phr, bevorzugt im Bereich von 5 phr bis 190 phr, besonders bevorzugt im Bereich von 5 phr bis 150 phr, jeweils bezogen auf die Gesamtmasse des Kautschuks der Elektrodenschicht.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

Bevorzugt ist ein erfindungsgemäßer Reifen wie vorstehend beschrieben oder wie vorstehend als bevorzugt beschrieben, wobei die Kautschukschicht mindestens einen Füllstoff umfasst.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

Bevorzugt ist ein erfindungsgemäßer Reifen wie vorstehend beschrieben oder wie vorstehend als bevorzugt beschrieben, wobei der mindestens eine Füllstoff der Kautschukschicht Silica ist, wobei der mindestens eine Füllstoff in einer Gesamtmenge im Bereich von 0,1 phr bis 50 phr, bevorzugt im Bereich von 1 phr bis 30 phr, besonders bevorzugt im Bereich von 2 phr bis 25 phr, ganz besonders bevorzugt im Bereich von 3 phr bis 20 phr, jeweils bezogen auf die Gesamtmasse der Kautschukschicht.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

Bevorzugt ist ein erfindungsgemäßer Reifen wie vorstehend beschrieben oder wie vorstehend als bevorzugt beschrieben, wobei der mindestens eine Füllstoff in der Kautschukschicht Ruß und/oder Silica ist, wobei Ruß bevorzugt ist und bevorzugt in einer Gesamtmenge im Bereich von 0,1 phr bis 60 phr, bevorzugt im Bereich von 1 phr bis 30 phr, besonders bevorzugt im Bereich von 2 phr bis 20 phr, jeweils bezogen auf die Gesamtmasse der Kautschukschicht.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

Bevorzugt ist ein erfindungsgemäßer Reifen wie vorstehend beschrieben oder wie vorstehend als bevorzugt beschrieben, wobei der eine oder einer der mehreren Kautschuke der Kautschukschicht ausgesucht aus der Gruppe bestehend aus Kautschuk, Polyester, Polyethylen, Polyethylen-Terphthalate, Polypropylen, Polystyrol, Polychlorobutadien, Polyacrylonitril, Polyvinylchlorid, Poly(organo)siloxane, vulkanisierte Kautschukpartikel, Füllstoffe und deren Mischungen, wobei als Kautschuk die Kautschuke NR, ENR, BR, SBR, SSBR, PDMS, ESBR und Epichlorohydrin bevorzugt sind.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

Bevorzugt ist ein erfindungsgemäßer Reifen wie vorstehend beschrieben oder wie vorstehend als bevorzugt beschrieben, wobei die Kautschukschicht
- SBR und/oder PDMS umfasst, bevorzugt SBR umfasst,
   oder
- hauptschlich oder gänzlich aus SBR oder PDMS besteht, bevorzugt ausschließlich aus SBR besteht.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

Bevorzugt ist ein erfindungsgemäßer Reifen wie vorstehend beschrieben oder wie vorstehend als bevorzugt beschrieben, wobei die an die Elektrodenschicht anliegende Oberfläche der Kautschukschicht eine Oberflächenrauheit Rₐ im Bereich von 0,1 µm bis 500 µm aufweist, bevorzugt im Bereich von 0,5 bis 100 µm, besonders bevorzugt im Bereich von 1 bis 50 µm, ganz besonders bevorzugt im Bereich von 1 bis 5 µm, gemessen nach DIN EN ISO 4288:1998.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

Bevorzugt ist ein erfindungsgemäßer Reifen wie vorstehend beschrieben oder wie vorstehend als bevorzugt beschrieben, wobei die Kautschukschicht eine Schichtdicke im Bereich im Bereich von 0,1 bis 800 mm aufweist, bevorzugt im Bereich von 1 mm bis 250 mm oder von 5 bis 150 mm, besonders bevorzugt im Bereich von 10 bis 120mm.

Eine solche Vorrichtung ermöglicht eine noch größere Energiedichte im Vergleich zu Vorrichtungen zu anderen vorstehend beschriebenen Vorrichtungen und insbesondere im Vergleich zu Vorrichtungen nicht-erfindungsgemäßer Reifen.

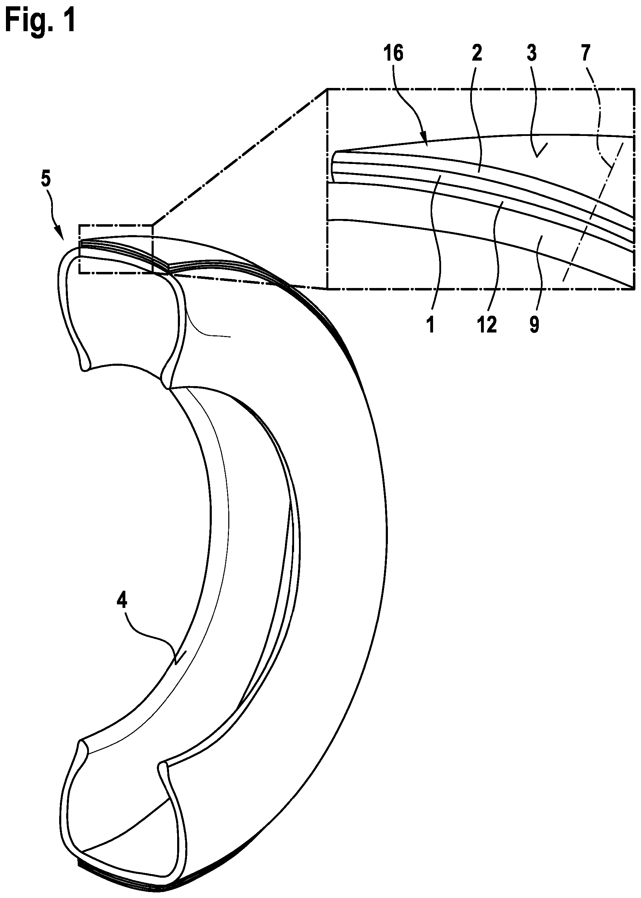

Bevorzugt ist ein erfindungsgemäßer Reifen wie vorstehend beschrieben oder wie vorstehend als bevorzugt beschrieben, wobei die Mittelachse der Vorrichtung in radialer Richtung verläuft und wobei die Kautschukschicht und die Elektrodenschicht im Laufstreifen des Reifen angeordnet sind und wobei die der Elektrodenschicht gegenüberliegenden Oberfläche der Kautschukschicht zumindest einen Teil der Bodenkontaktfläche des Reifens umfasst. Eine in radialer Richtung verlaufenden Mittelachse einer Vorrichtung eines erfindungsgemäßen Fahrzeugluftreifens ist beispielsweise nachstehend in Figur 1 gezeigt. Im Rahmen der vorliegenden Erfindung verläuft zumindest eine Mittelachse an einer Stelle einer solchen Vorrichtung in radialer Richtung.

Ein Vorteil des vorstehend beschriebenen Aspekts der vorliegenden Erfindung ist, dass die relativ große Fläche der Bodenkontaktfläche eines erfindungsgemäßen Reifens zu Spannungsänderung genutzt werden kann und somit möglichst viele Elektronen zu verschieben.

Bevorzugt ist ein erfindungsgemäßer Reifen wie vorstehend beschrieben oder wie vorstehend als bevorzugt beschrieben, wobei die Mittelachse der Vorrichtung in axiale Richtung verläuft und wobei die Kautschukschicht und die Elektrodenschicht im Wulstbereich des Reifen angeordnet sind und wobei die der Elektrodenschicht gegenüberliegenden Oberfläche der Kautschukschicht zumindest einen Teil der Felgenaufstandsfläche des Reifens umfasst.

Ein Vorteil des vorstehend beschriebenen Aspekts der vorliegenden Erfindung ist, dass die Energiegewinnung über der Felgenaufstandsfläche eines erfindungsgemäßen Reifens, wie beispielsweise den Rim-Strip, erfolgen kann und somit die Lauffläche eines erfindungsgemäßen Reifens hinsichtlich anderer wichtiger Parameter wie dem Brems- oder Kurvenverhalten optimiert werden kann. Ein weiterer Vorteil ist hier, dass das Metall der Felge zudem als gegen Elektrode zur Elektrodenschicht der Vorrichtung eines erfindungsgemäßen Reifens verwendet werden kann und sich somit nicht nur mehr Elektronen verschieben lassen können, sondern auch eine höhere Spannungsänderung erreicht werden kann im Vergleich zu einem erfindungsgemäßen Reifen, bei dem die Vorrichtung im Laufstreifen angebracht ist.

Die erfinderische Idee des vorstehend beschriebenen Aspekts der vorliegenden Erfindung ist dabei die gleiche wie vorstehend für eine Vorrichtung in einem Laufstreifen eines erfindungsgemäßen Reifens beschriebene Wirkungsweise. Je nachdem ob der Teil der Felgenaufstandsfläche sich zwischen Fahrbahn und Felge oder davon oberhalb zwischen Felge und Fahrzeug befindet wird ein unterschiedlicher Druck auf die Vorrichtung eines erfindungsgemäßen Reifens ausgeübt. Diese Variation des Druckes auf die Vorrichtung eines erfindungsgemäßen Reifens verändert wie vorstehend beschrieben durch die triboelektrischen Effekte eine Veränderung der Spannung zwischen diesen beiden Schichten, welche als Wechselstromquelle verwendet werden kann.

Im Rahmen der vorliegenden Erfindung verläuft zumindest eine Mittelachse an einer Stelle einer solchen Vorrichtung in axialer Richtung.

Bevorzugt ist ein erfindungsgemäßer Reifen wie vorstehend beschrieben oder wie vorstehend als bevorzugt beschrieben, wobei die Elektrodenschicht oder jeder Elektrodenschichtabschnitt der Vorrichtung eine Stromversorgungsschaltung zur Verbindung mit den Kontaktierungen zur Abnahme einer zwischen den Schichten vorliegenden elektrischen Spannung aufweist, wobei die Stromversorgungsschaltung
- eine zwischen den Schichten erzeugte elektrische Spannung aufnehmen kann und
- eine Gleichrichtereinheit, bevorzugt eine Gleichrichtereinheit bestehend aus einem mit der Elektrodenschicht oder mit einem Elektrodenschichtabschnitt verbundenen Zweiweg-Gleichrichter mit einer Kontaktierung für eine Felge und mit einem Energiespeicher zur Zwischenspeicherung der Energie einer zwischen einer Felge und der Elektrodenschicht oder der Elektrodenschichtabschnitt erzeugten elektrischen Spannung, aufweist.

Nachstehend sind vier außerordentlich bevorzugte Ausführungsformen der vorliegenden Erfindung beschrieben:
In besonders hohem Maße bevorzugt ist ein erfindungsgemäßer Reifen umfassend eine Vorrichtung wie vorstehend beschrieben oder wie vorstehend als bevorzugt beschrieben, wobei die Vorrichtung eine Elektrodenschicht und eine Kautschukschicht sowie an den Schichten vorgesehene Kontaktierungen zur Abnahme einer zwischen den Schichten vorliegenden elektrischen Spannung umfasst, dadurch gekennzeichnet, dass
a) die Elektrodenschicht eine elektrische Leitfähigkeit von mindestens 0,001 S/m bei 20 °C aufweist,
b) die Kautschukschicht aus SBR oder PDMS besteht und eine elektrische Leitfähigkeit von weniger als 10⁻⁵ S/m bei 20 °C aufweist,
wobei
- die Elektrodenschicht und die Kautschukschicht im Laufstreifen des Reifens übereinander angeordnet sind,
- die der Elektrodenschicht gegenüberliegenden Oberfläche der Kautschukschicht vollumfänglich die Bodenkontaktfläche des Reifens bildet und die Elektrodenschicht in vier voneinander elektrisch isolierte Elektrodenschichtabschnitte umfasst,
- je zwei gegenüberliegende Elektrodenschichtabschnitte der Vorrichtung über eine Stromversorgungsschaltung zur Verbindung mit den Kontaktierungen zur Abnahme einer zwischen den Schichten vorliegenden elektrischen Spannung elektrisch verbunden sind, wobei die Stromversorgungsschaltung
   - die zwischen den Schichten erzeugte elektrische Spannung aufnehmen kann und
   - eine Gleichrichtereinheit bestehend aus einem die zwei besagten gegenüberliegenden Elektrodenschichtabschnitte verbindenden Zweiweg-Gleichrichter mit einem Energiespeicher zur Zwischenspeicherung der Energie der zwischen den Schichten vorliegenden elektrischen Spannung aufweist,
- der Kautschuk der Kautschukschicht eine relative Permittivität im Bereich von 2,25 bis 3 aufweist, gemessen bei 60 °C und einer Frequenz von 10 Hz,
- wobei die Vorrichtung dazu geeignet ist, mindestens einen Energiespeicher, wie eine Batterie oder einen Akkumulator, aufzuladen, wobei der eine Energiespeicher an dem Reifen oder an einer Felge zum Aufziehen des Reifens angebracht werden kann, und
- das Elektrodenmaterial der Elektrodenschichtabschnitte Ruß als Füllstoff und einen Kautschuk umfassend NR, IR, ENR, BR, SBR, SSBR, PDMS, ESBR und Epichlorohydrin oder deren Mischungen umfasst, wobei der Ruß in einer Gesamtmenge im Bereich von 5 phr bis 190 phr, bezogen auf die Gesamtmasse des Kautschuks der Kautschukschicht.

In besonders hohem Maße bevorzugt ist auch ein Reifen umfassend eine Vorrichtung, wobei die Vorrichtung eine Elektrodenschicht und eine Kautschukschicht sowie an den Schichten vorgesehene Kontaktierungen zur Abnahme einer zwischen den Schichten vorliegenden elektrischen Spannung umfasst, dadurch gekennzeichnet, dass
a) die Elektrodenschicht eine elektrische Leitfähigkeit von mindestens 0,001 S/m bei 20 °C aufweist,
b) die Kautschukschicht aus SBR oder PDMS besteht und eine elektrische Leitfähigkeit von weniger als 10⁻⁵ S/m bei 20 °C aufweist,
wobei
- die Elektrodenschicht und die Kautschukschicht im Laufstreifen des Reifen übereinander angeordnet sind,
- die der Elektrodenschicht gegenüberliegenden Oberfläche der Kautschukschicht vollumfänglich die Bodenkontaktfläche des Reifens bildet und die Elektrodenschicht in vier voneinander elektrisch isolierte Elektrodenschichtabschnitte umfasst,
- jeder Elektrodenschichtabschnitt der Vorrichtung eine Stromversorgungsschaltung zur Verbindung mit den Kontaktierungen zur Abnahme einer zwischen den Schichten vorliegenden elektrischen Spannung aufweist, wobei die Stromversorgungsschaltung
   - die zwischen den zwei Schichten erzeugte elektrische Spannung aufnehmen kann und
   - eine Gleichrichtereinheit bestehend aus einem Zweiweg-Gleichrichter mit einer Erdung und mit einem Energiespeicher zur Zwischenspeicherung der Energie der zwischen den Schichten vorliegenden elektrischen Spannung aufweist,
- der Kautschuk der Kautschukschicht eine relative Permittivität im Bereich von 2,25 bis 3 aufweist, gemessen bei 60 °C und einer Frequenz von 10 Hz,
- wobei die Vorrichtung dazu geeignet ist, mindestens einen Energiespeicher, wie eine Batterie oder einen Akkumulator, aufzuladen, wobei der eine Energiespeicher an dem Reifen oder an einer Felge zum Aufziehen des Reifens angebracht werden kann,
   und
- das Elektrodenmaterial der Elektrodenschichtabschnitte Ruß als Füllstoff und einen Kautschuk umfassend NR, IR, ENR, BR, SBR, SSBR, PDMS, ESBR und Epichlorohydrin oder deren Mischungen umfasst, wobei der Ruß in einer Gesamtmenge im Bereich von 5 phr bis 190 phr, bezogen auf die Gesamtmasse des Kautschuks der Kautschukschicht.

In besonders hohem Maße bevorzugt ist auch ein Reifen umfassend eine Vorrichtung, wobei die Vorrichtung eine Elektrodenschicht und eine Kautschukschicht sowie an den Schichten vorgesehene Kontaktierungen zur Abnahme einer zwischen den Schichten vorliegenden elektrischen Spannung umfasst, dadurch gekennzeichnet, dass
a) die Elektrodenschicht besteht und eine elektrische Leitfähigkeit von mindestens 0,001 S/m bei 20 °C aufweist,
b) die Kautschukschicht aus SBR oder PDMS besteht und eine elektrische Leitfähigkeit von weniger als 10⁻⁵ S/m bei 20 °C aufweist,
wobei
- die Elektrodenschicht und die Kautschukschicht im Laufstreifen des Reifen übereinander angeordnet sind,
- die der Elektrodenschicht gegenüberliegenden Oberfläche der Kautschukschicht zumindest einen Teil der Bodenkontaktfläche des Reifens umfasst,
- die der Elektrodenschicht gegenüberliegenden Oberfläche der Kautschukschicht vollumfänglich die Bodenkontaktfläche des Reifens bildet und die Elektrodenschicht in vier voneinander elektrisch isolierte Elektrodenschichtabschnitte umfasst,
- jeder Elektrodenschichtabschnitt der Vorrichtung über eine Stromversorgungsschaltung zur Verbindung mit den Kontaktierungen zur Abnahme einer zwischen den Schichten vorliegenden elektrischen Spannung aufweist, wobei die Stromversorgungsschaltung
   - die zwischen den Schichten erzeugte elektrische Spannung aufnehmen kann und
   - eine Gleichrichtereinheit bestehend aus einem Einweg-Gleichrichter mit einem Energiespeicher zur Zwischenspeicherung der Energie der zwischen den Schichten vorliegenden elektrischen Spannung aufweist,
- der Kautschuk der Kautschukschicht eine relative im Bereich von 2,25 bis 3 aufweist, gemessen bei 60 °C und einer Frequenz von 10 Hz,
- wobei die Vorrichtung dazu geeignet ist, mindestens einen Energiespeicher, wie eine Batterie oder einen Akkumulator, aufzuladen, wobei der eine Energiespeicher an dem Reifen oder an einer Felge zum Aufziehen des Reifens angebracht werden kann, und
- das Elektrodenmaterial der Elektrodenschichtabschnitte Ruß als Füllstoff und einen Kautschuk umfassend NR, IR, ENR, BR, SBR, SSBR, PDMS, ESBR und Epichlorohydrin oder deren Mischungen umfasst, wobei der Ruß in einer Gesamtmenge im Bereich von 5 phr bis 190 phr, bezogen auf die Gesamtmasse des Kautschuks der Kautschukschicht.

In besonders hohem Maße bevorzugt ist auch ein Reifen umfassend eine Vorrichtung, wobei die Vorrichtung eine Elektrodenschicht und eine Kautschukschicht sowie an den Schichten vorgesehene Kontaktierungen zur Abnahme einer zwischen den Schichten vorliegenden elektrischen Spannung umfasst, dadurch gekennzeichnet, dass
a) die Elektrodenschicht eine elektrische Leitfähigkeit von mindestens 0,001 S/m bei 20 °C aufweist,
b) die Kautschukschicht aus SBR oder PDMS besteht und eine elektrische Leitfähigkeit von weniger als 10⁻⁵ S/m bei 20 °C aufweist,
wobei
- die Elektrodenschicht und die Kautschukschicht im Wulstbereich des Reifen übereinander angeordnet sind,
- die der Elektrodenschicht gegenüberliegenden Oberfläche der Kautschukschicht vollumfänglich die Felgenaufstandsfläche des Reifens bildet,
- die Elektrodenschicht der Vorrichtung über eine Stromversorgungsschaltung zur Verbindung mit den Kontaktierungen zur Abnahme einer zwischen der Elektrodenschicht und der Felge vorliegenden elektrischen Spannung aufweist, wobei die Stromversorgungsschaltung
   - die zwischen den Schichten erzeugte elektrische Spannung aufnehmen kann und
   - eine Gleichrichtereinheit bestehend aus einem mit der Elektrodenschicht und der Felge kontaktierten Zweiweg-Gleichrichter umfassend einen Energiespeicher zur Zwischenspeicherung der Energie der zwischen den Schichten vorliegenden elektrischen Spannung aufweist,
- der Kautschuk der Kautschukschicht eine relative im Bereich von 2,25 bis 3 aufweist, gemessen bei 60 °C und einer Frequenz von 10 Hz,
- wobei die Vorrichtung dazu geeignet ist, mindestens einen Energiespeicher, wie eine Batterie oder einen Akkumulator, aufzuladen, wobei der eine Energiespeicher an dem Reifen oder an einer Felge zum Aufziehen des Reifens angebracht werden kann, und
- das Elektrodenmaterial der Elektrodenschichtabschnitte Ruß als Füllstoff und einen Kautschuk umfassend NR, IR, ENR, BR, SBR, SSBR, PDMS, ESBR und Epichlorohydrin oder deren Mischungen umfasst, wobei der Ruß in einer Gesamtmenge im Bereich von 5 phr bis 190 phr, bezogen auf die Gesamtmasse des Kautschuks des jeweiligen Elektrodenschichtabschnitts.

### Figurenbeschreibung:

Es zeigt:
- Figur 1:: Eine perspektivische Ansicht auf einen quergeschnittenen erfindungsgemäßen Fahrzeugluftreifen in einer ersten Ausführungsform mit Elektrodenschicht und Kautschukschicht im Laufstreifen und einer Batterie, welche auf der dem Laufstreifen gegenüberliegenden Seite Innenseite des Fahrzeugluftreifens angebracht ist;

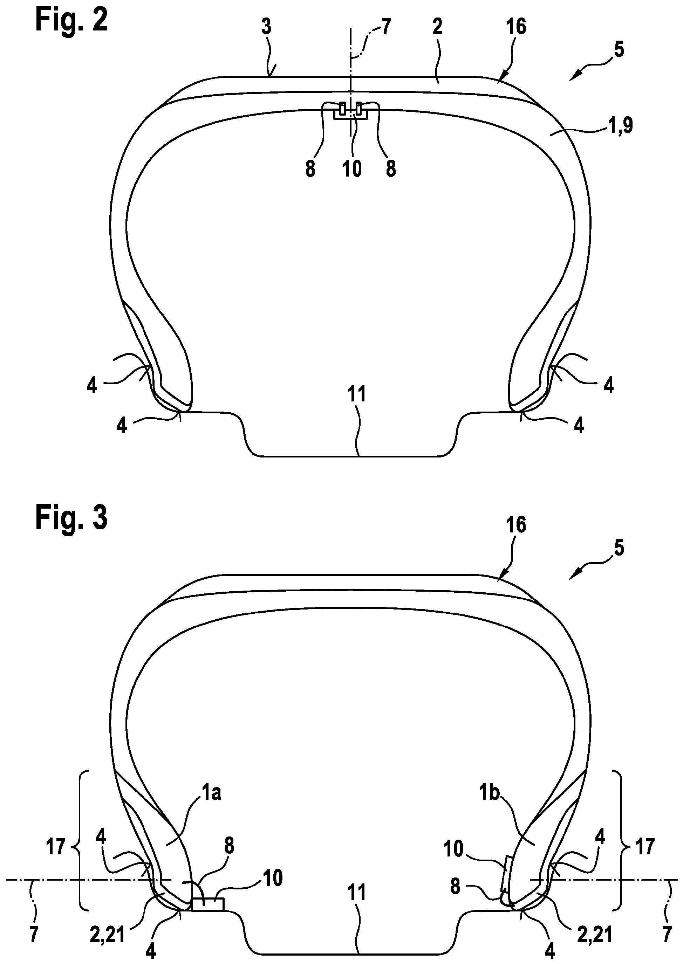

- Figur 2:: Eine Radialschnittansicht eines schematisch dargestellten erfindungsgemäßen Fahrzeugluftreifens in einer weiteren Ausführungsform umfassend eine Elektrodenschicht und Kautschukschicht im Wulstbereich und zwei Batterien, wobei eine Batterie an der Reifeninnenseite im Wulstberiech des Fahrzeugluftreifens und die andere Batterie an der Felge, auf der Reifen aufgezogen ist, angebracht ist;
- Figur 3:: Eine Radialschnittansicht eines schematisch dargestellten erfindungsgemäßen Fahrzeugluftreifens in einer weiteren Ausführungsform mit einem Laufstreifen umfassend Batterien an der Felge und zwei SBR-Schichten als Kautschukschichten am Rim-Strip an der Felge;

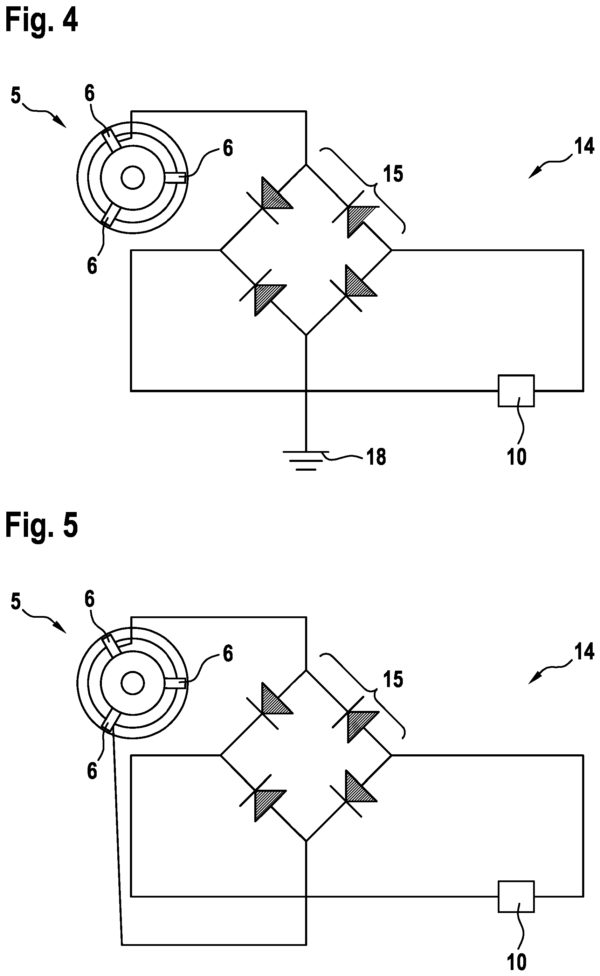

- Figur 4:: Einen schematisch dargestellten Stromkreis für eine Stromversorgungsschaltung eines erfindungsmäßen Fahrzeugluftreifen in einer weiteren Ausführungsform, wobei die Stromversorgungsschaltung eine Gleichrichtereinheit bestehend aus einem Zweiweg-Gleichrichter mit einer Erdung und mit einem Energiespeicher zur Zwischenspeicherung der Energie der zwischen den Schichten vorliegenden elektrischen Spannung aufweist;
- Figur 5:: Einen schematisch dargestellten Stromkreis für eine Stromversorgungsschaltung eines erfindungsmäßen Fahrzeugluftreifen in einer weiteren Ausführungsform, wobei die Stromversorgungsschaltung eine Gleichrichtereinheit bestehend aus einem die zwei Elektrodenschichtabschnitte verbindenden Zweiweg-Gleichrichter mit einem Energiespeicher zur Zwischenspeicherung der Energie der zwischen den Schichten vorliegenden elektrischen Spannung aufweist;

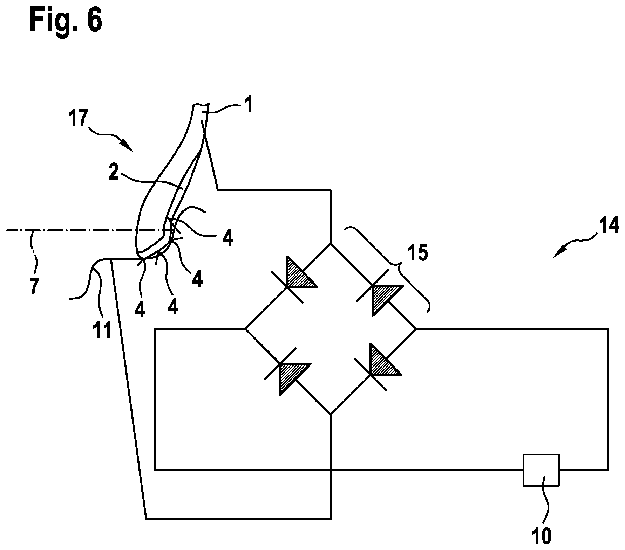

- Figur 6:: Einen schematisch dargestellten Stromkreis für eine Stromversorgungsschaltung eines erfindungsmäßen Fahrzeugluftreifen in einer weiteren Ausführungsform, wobei die Stromversorgungsschaltung eine Gleichrichtereinheit bestehend aus einem die Elektrodenschicht und die Felge verbindenden Zweiweg-Gleichrichter mit einem Energiespeicher zur Zwischenspeicherung der Energie der zwischen den Schichten vorliegenden elektrischen Spannung aufweist.

Figur 1 zeigt eine perspektivische Ansicht auf einen quergeschnittenen erfindungsgemäßen Fahrzeugluftreifen 5, welche im Laufstreifen 16 eine Kautschukschicht 2 und eine Elektrodenschicht 1 umfasst. Der Bereich des gezeigten Fahrzeugluftreifens 5 mit der gestrichelten Umrandung ist ebenfalls in Figur 1 vergrößert dargestellt.

Die Kautschukschicht 2 bildet dabei den radial äußeren Teil des Laufstreifens, welche auch die Bodenaufstandsfläche 3 umfasst. Dargestellt ist zudem die Mittelachse 7 der Vorrichtung umfassend die Kautschukschicht 2 und die Elektrodenschicht 1, wobei die Mittelachse 7 senkrecht auf der Bodenkontaktfläche 3 steht. Zu sehen ist zudem eine weitere Kautschukkomponente 12 im Laufstreifen 16 sowie die Felgenaufstandsfläche 4 des Reifens 5.

Figur 2 zeigt einen schematisch dargestellten erfindungsgemäßen Fahrzeugluftreifen 5 mit einer Felge 11, wobei die Kautschukschicht 2 den Laufstreifen 16 des Fahrzeugreifen 5 bildet. Die Kautschukschicht 2 umfasst die Bodenaufstandsfläche 3. Gezeigt ist auch die Elektrodenschicht 1, welche einen Teil des Mittelteils 9 Reifens 5 bildet. Dargestellt ist zudem die Mittelachse 7 der Vorrichtung umfassend die Kautschukschicht 2 und die Elektrodenschicht 1, wobei die Mittelachse 7 senkrecht auf der Bodenkontaktfläche 3 steht. Zu sehen ist zudem die Felgenaufstandsfläche 4 des Reifens 5. der in Figur 2 dargestellte Fahrzeugluftreifen 5 umfasst zusätzlich eine Batterie 10, welche mittels Kontaktierungen 8 mit der Elektrodenschicht 1 im Mittelteil 9 des Reifens 5 verbunden ist.

Figur 3 zeigt einen schematisch dargestellten erfindungsgemäßen Fahrzeugluftreifen 5 mit einer Felge 11, wobei die Kautschukschicht 2 den Rim-Strip 21 im Wulstbereich 17 des Fahrzeugreifen 5 bildet. Die Kautschukschicht 2 umfasst die Felgenaufstandsfläche 4. Gezeigt ist auch die Elektrodenschicht 1, welche einen Teil des Mittelteils 9 Reifens 5 bildet. Dargestellt ist zudem die Mittelachse 7 der Vorrichtung umfassend die Kautschukschicht 2 und die Elektrodenschicht 1, wobei die Mittelachse 7 senkrecht auf der Felgenaufstandsfläche 4 Laufstreifen 16 steht. Zu sehen ist zudem die Felgenaufstandsfläche 4 des Reifens 5. Der in Figur 3 dargestellte Fahrzeugluftreifen 5 umfasst zusätzlich zwei Batterien 10, welche mittels Kontaktierungen 8 mit einem Elektrodenschichtabschnitt 1a, 1b im Mittelteil 9 des Reifens 5 verbunden sind.

In Figur 4 ist schematisch eine Stromversorgungsschaltung dargestellt, welche über Kontaktierungen mit einer Vorrichtung 6 verbunden ist. Die Bodenkontaktfläche 3 des Reifens 5 ist in der Stromversorgungsschaltung in Figur 4 ebenfalls schematisch dargestellt. Eine Erdung 18 liegt an der Grätz-Schaltung 15 als Teil der Gleichrichtereinheit 14 umfassend einen Energiespeicher 10 vor. Der Energiespeicher 10 kann eine Batterie und zusätzlich einen Kondensator zur Glättung des Stromflusses aufweisen. Die in Figur 4 gezeigte Stromversorgungsschaltung kann in jeder der drei Vorrichtungen 6 des Reifens 5 kontaktiert werden, um somit beim Rollen des Reifens 5 drei Energiespeicher 10 zu laden. Jedoch kann in dieser Ausführungsform nur ein Spannungsunterschied im Vergleich zur Erdung pro Stromversorgungsschaltung erreicht werden.

In Figur 5 ist schematisch eine Stromversorgungsschaltung dargestellt, welche über Kontaktierungen mit zwei der vier Vorrichtungen 6 des Reifens 5 verbunden ist, wobei die zwei anderen Vorrichtungen 6 jedoch genauso verschaltet werden können. Die Stromversorgungsschaltung umfasst eine Grätz-Schaltung 15 als Teil der Gleichrichtereinheit 14 umfassend einen Energiespeicher 10 vor. Der Energiespeicher 10 kann eine Batterie und zusätzlich einen Kondensator zur Glättung des Stromflusses aufweisen. Da immer nur eine Vorrichtung 6 des Reifens 5 in der Bodenkontaktfläche 3 beim Rollen des Reifens 5 unter Druck gesetzt werden kann, ergibt sich beim Rollen ein Potenzialunterschied zwischen den Elektrodenschichten der zwei jeweils verbundenen Vorrichtungen 6, welcher als Wechselstromquelle und mit der in Figur 5 gezeigten Stromversorgungsschaltung auch als Gleichstromquelle genutzt werden kann. Ein Vorteil dieser Stromversorgungsschaltung ist, dass ein höherer Potenzialunterschied im Vergleich zu einer Schaltung wie in Figur 4 gezeigt erreicht werden kann. Ein höherer Potenzialunterschied ermöglicht ohne weitere elektrotechnische Vorrichtungen, Sensoren im Reifen zu betreiben, welche eine entsprechend höhere Spannung benötigen.

In Figur 6 ist schematisch eine Stromversorgungsschaltung dargestellt, welche über Kontaktierungen mit einer Vorrichtungen 6 im Wulstberiech 17 eines Reifens verbunden ist, wobei eine entsprechende Vorrichtung 6 jedoch genauso am anderen Ende der Felge 11 verschaltet werden können. Die Stromversorgungsschaltung umfasst eine Grätz-Schaltung 15 als Teil der Gleichrichtereinheit 14 umfassend einen Energiespeicher 10 vor. Der Energiespeicher 10 kann eine Batterie und zusätzlich einen Kondensator zur Glättung des Stromflusses aufweisen. Wenn die Vorrichtung 6 beim Rollen des Reifens unter Druck gesetzt wird, ergibt sich beim Rollen ein Potenzialunterschied zwischen den Elektrodenschicht 2 und dem Metall der Felge 11, welcher als Wechselstromquelle und mit der in Figur 5 gezeigten Stromversorgungsschaltung auch als Gleichstromquelle genutzt werden kann. Ein Vorteil dieser Stromversorgungsschaltung ist, dass ein höherer Potenzialunterschied im Vergleich zu einer Schaltung wie in Figur 4 oder sogar in Figur 5 gezeigt erreicht werden kann, da die triboelektrische Affinität von Metall zu einem Kautschuk noch höher ist als zwischen zwei Kautschuken wie vorstehend beschrieben. Ein höherer Potenzialunterschied ermöglicht ohne weitere elektrotechnische Vorrichtungen, Sensoren im Reifen zu betreiben, welche eine entsprechend höhere Spannung benötigen.

### Bezugszeichenliste:

- 1: Elektrodenschicht
- 1a, 1b, 1c, 1d: Elektrodenschichtabschnitt
- 2: Kautschukschicht
- 3: Bodenkontaktfläche, Fahrbahnkontaktfläche, Bodenaufstandsfläche
- 4: Felgenaufstandsfläche
- 5: Reifen, Fahrzeugreifen, Fahrzeugluftreifen
- 6: Vorrichtung
- 7: Mittelachse der Vorrichtung
- 8: Kontaktierungen zur Abnahme einer zwischen den Schichten vorliegenden elektrischen Spannung
- 9: Innerliner, Gürtel, Karkasse und Spulbandage umfassender Mittelteil des Reifens
- 10: Energiespeicher zur Zwischenspeicherung der Energie der zwischen den Schichten vorliegenden elektrischen Spannung
- 11: Felge
- 12: nichtmetallische Kautschukkomponenten im Laufstreifen
- 13: Stromversorgungsschaltung zur Verbindung mit den Kontaktierungen
- 14: Gleichrichtereinheit
- 15: Grätz-Schaltung mit vier Dioden
- 16: Laufstreifen des Reifens
- 17: Wulstbereich des Reifens
- 18: Erdung
- 19: radiale Richtung
- 20: axiale Richtung
- 21: Rim-Strip im Wulstberiech des Reifens

### Experimentelle Beispiele:

### Messmethoden:

### 1. Permittivität einer Kautschukart

Die Ergebnisse wurden mit einem handelsüblichen RLC-Messgerät nach einem für den Fachmann bekannten Verfahren bei 60°C und einer Frequenz von 10 Hz ermittelt. Die Ermittlung der spezifischen Permittivität eᵢ (s. Tabelle 1 unten) wurde wie folgt mittels des handelsüblichen RLC- Messgerät ausgeführt: Der Verlustfaktor Tan δ wird direkt als "DF-Dissipation Factor" vom RLC-Messgerät angezeigt, während er mit Hilfe der Messergebnisse des mit der jeweiligen Kautschukart der Kautschukschicht gefüllten Plattenkondensators errechnet werden muss. Bei der Kapazitätsmessung muss berücksichtigt werden, dass am Eingang der Brücke des Plattenkondensators außer der gesuchten Kapazität der Elektroden auch die Kapazität der Zuleitung und des Probenkondensatorgehäuses miterfasst wird. Die daraus resultierende Fehlkapazität CF ist unabhängig von der Frequenz und muss bei der Auswertung berücksichtigt werden.

### 2. Elektrische Leitfähigkeit

Die Ergebnisse wurden bei 20 °C mit einem handelsüblichen Leitfähigkeitsmessgerät nach einem für den Fachmann bekannten Verfahren ermittelt.

### 3. Energiedichte

Die Ergebnisse wurden aus den Messwerten der gemäß einer bestimmten Messmethode gemessenen Spannung und Stromstärke ermittelt, wobei die bestimmte Messmethode in der deutschen Anmeldung mit der Anmeldeaktenzeichen 10 2018 221 047.0 auf der Seite 31, Zeile 1 bis Seite 33, Zeile 2 der ursprünglichen Anmeldungsunterlagen beschrieben ist, wobei im Rahmen der vorliegenden Erfindung auf einer Elektrode keine Kautschukschicht und auf der anderen die Kautschukschicht wie in Tabelle 1 angegeben aufgebracht wurde. Zudem wurde zur Messung die Messvorrichtung in Figur 3 der besagten Anmeldung gezeigt verwendet (siehe Figurenbeschreibung zu Figur 3 in der besagten Anmeldung).

### Herstellung:

Herstellung eines erfindungsgemäßen Laufstreifenabschnittes für einen Fahrzeugluftreifen:
Die Herstellung der getesteten Reifen erfolgte nach dem in der Kautschukindustrie üblichen Verfahren, bei dem zunächst in ein oder mehreren Mischstufen eine Grundmischung umfassend die in Tabelle 1 beschriebene Kautschukart mit allen zusätzlich nötigen Bestandteilen außer einem geeigneten Vulkanisationssystem hergestellt wird. Durch Zugabe des Vulkanisationssystems in einer letzten Mischstufe wird die Fertigmischung erzeugt. Die Fertigmischung wird dann z.B. durch einen Extrusionsvorgang oder Kalandrieren zu einer Schicht, dies entspricht einer Kautschukschicht eines erfindungsgemäßen Reifens, weiterverarbeitet und auf eine ebenso hergestellte Elektrodenschicht (hier: eine 30 phr Ruß umfassende NR-Schicht mit einer Leitfähigkeit von 0,001 S/m bei 20 °C) aufgebracht. Der so entstehende Experimental-Laufstreifenabschnitt hatte eine Größe von 2 x 2 cm und eine Dicke von 120 µm. Die Schicht wurde dann wie vorstehend beschrieben auf ihre Energiedichte hin getestet.

### Ergebnisse:

**Tabelle 1: Experimentelle Ergebnisse der getesteten Fahrzeugluftreifen**

| **Parameter** | Relative Permittivität eᵣ* | elektr. Leitfähigkeit | Energiedichte |
|---|---|---|---|
| **Einheit** | --- | [S/m] | [µW/cm²] |
| **Art der Kautschukschicht** | | | |
| Isoprene-rubber (IR) | 2.29 | < 1 | 1.8 |
| Natural Rubber (NR) | 2.44 | < 1 | 4.9 |
| Styrene-Butadiene-Rubber (SBR) | 2.47 | < 1 | 6 |
| Poly(dimethyl)siloxan (PDMS) | 2.79 | < 1 | 7.5 |

| | | | |
|---|---|---|---|
| *relative Permittivität einer Kautschukart i: gemessen bei 60°C und einer Frequenz von 10 Hz und ermittelt im Verhältnis zum Permittivität e₀ im Vakuum: eᵣ = eᵢ / e₀. | | | |

Die Ergebnisse in Tabelle 1 zeigen, dass bei der Verwendung eines Kautschuks mit einer relative Permittivität im Bereich von 2.44 bis 2.79 höhere energiedichten erreicht werden.

## Patentansprüche

1. Reifen umfassend eine Vorrichtung (6), wobei die Vorrichtung (6) eine Elektrodenschicht (1) und eine Kautschukschicht (2) sowie an den Schichten (1, 2) vorgesehene Kontaktierungen (8) zur Abnahme einer zwischen den Schichten (1, 2) erzeugten elektrischen Spannung aufweist, und die Vorrichtung integraler Bestandteil des Reifens ist,
wobei
a) die Elektrodenschicht (1) ein Elektrodenmaterial mit einer elektrischen Leitfähigkeit von mindestens 0,001 S/m bei 20 °C umfasst,
b) die Kautschukschicht (2) Kautschuk mit einer elektrischen Leitfähigkeit von weniger als 10⁻⁵ S/m bei 20 °C umfasst,
wobei
- die Elektrodenschicht (1) und die Kautschukschicht (2) übereinander angeordnet sind
und
- die der Elektrodenschicht (1) gegenüberliegenden Oberfläche der Kautschukschicht (2) zumindest einen Teil der Bodenkontaktfläche (3) oder zumindest einen Teil der Felgenaufstandsfläche (4) des Reifens (5) umfasst,
**dadurch gekennzeichnet, dass**
das Elektrodenmaterial der Elektrodenschicht (1) oder der Elektrodenschichtabschnitte ein Kautschuk umfassend NR, IR, ENR, BR, SBR, SSBR, PDMS, ESBR und Epichlorohydrin oder deren Mischungen und mindestens einen Füllstoff umfasst, wobei der eine Füllstoff Ruß ist.

2. Reifen nach Anspruch 1, wobei die Vorrichtung dazu geeignet ist, wobei der Kautschuk der Kautschukschicht (2) eine relative Permittivität im Bereich von 1 bis 5 aufweist, bevorzugt im Bereich von 2,25 bis 4, besonders bevorzugt von 2,44 bis 3,5, insbesondere ganz besonders bevorzug im Bereich von 2,45 bis 3, in besonders hohem Maße bevorzugt im Bereich von 2,47 bis 2,80, gemessen bei 60 °C und einer Frequenz von 10 Hz.

3. Reifen nach einem der vorangehenden Ansprüche, wobei die der Elektrodenschicht (1) gegenüberliegenden Oberfläche der Kautschukschicht (2) vollumfänglich hauptsächlich die Bodenkontaktfläche oder vollumfänglich die gesamte Bodenkontaktfläche (3) des Reifens (5) bildet und/oder die Elektrodenschicht (1) in mindestens zwei, bevorzugt vier, voneinander elektrisch isolierte Elektrodenschichtabschnitte (1a, 1b, 1c, 1d) umfasst.

4. Reifen nach einem der vorangehenden Ansprüche, wobei die Elektrodenschicht (1) oder je zwei gegenüberliegende Elektrodenschichtabschnitte (1a, 1b, 1c, 1d) oder jeder Elektrodenschichtabschnitt (1a, 1b, 1c, 1d) der Vorrichtung (6) eine Stromversorgungsschaltung (13) zur Verbindung mit den Kontaktierungen (8) zur Abnahme einer zwischen den Schichten (1, 2) vorliegenden elektrischen Spannung aufweist, wobei die Stromversorgungsschaltung (13)
- eine zwischen den Schichten (1, 2) erzeugte elektrische Spannung aufnehmen kann
und
- eine Gleichrichtereinheit (14) aufweist, wobei
- eine Gleichrichtereinheit (14) bestehend aus einem Zweiweg-Gleichrichter mit einer Erdung und mit einem Energiespeicher (10) zur Zwischenspeicherung der Energie einer zwischen den Schichten (1, 2) vorliegenden elektrischen Spannung
oder
- eine Gleichrichtereinheit (14) bestehend aus einem die zwei gegenüberliegende Elektrodenschichtabschnitte (1a, 1b, 1c, 1d) verbindenden Zweiweg-Gleichrichter mit einem Energiespeicher (10) zur Zwischenspeicherung der Energie einer zwischen den Schichten (1, 2) vorliegenden elektrischen Spannung.

5. Reifen nach einem der vorangehenden Ansprüche, wobei
- die Kautschukschicht (2) mindestens einen Füllstoff umfasst und
- der mindestens eine Füllstoff der Kautschukschicht (2)
- Silica ist, wobei der mindestens eine Füllstoff in einer Gesamtmenge im Bereich von 0,1 phr bis 50 phr, bevorzugt im Bereich von 1 phr bis 30 phr, besonders bevorzugt im Bereich von 2 phr bis 25 phr, ganz besonders bevorzugt im Bereich von 3 phr bis 20 phr, vorliegt, jeweils bezogen auf die Gesamtmasse der Kautschukschicht (2) der Vorrichtung (6),
und/oder
- Ruß ist und bevorzugt in einer Gesamtmenge im Bereich von 0,1 phr bis 60 phr, bevorzugt im Bereich von 1 phr bis 30 phr, besonders bevorzugt im Bereich von 2 phr bis 20 phr, jeweils bezogen auf die Gesamtmasse der Kautschukschicht (2) der Vorrichtung (6).

6. Reifen nach Anspruch 1, wobei der Ruß in der Elektrodenschicht (1) oder in jedem Elektrodenabschnitt (1a, 1b, 1c, 1d) in einer Gesamtmenge im Bereich von 1 phr bis 200 phr, bevorzugt im Bereich von 5 phr bis 190 phr, besonders bevorzugt im Bereich von 5 phr bis 150 vorliegt, phr, jeweils bezogen auf die Gesamtmasse des Kautschuks der Elektrodenschicht (1) oder des jeweiligen Elektrodenabschnittes.

7. Reifen nach einem der vorangehenden Ansprüche, wobei
- der eine oder einer der mehreren Kautschuke der Kautschukschicht (2) ausgesucht ist aus der Gruppe bestehend aus Kautschuk, Polyester, Polyethylen, Polyethylen-Terphthalate, Polypropylen, Polystyrol, Polychlorobutadien, Polyacrylonitril, Polyvinylchlorid, Poly(organo)siloxane, vulkanisierte Kautschukpartikel, Füllstoffe und deren Mischungen, wobei als Kautschuk die Kautschuke ENR, BR, SBR, SSBR, PDMS, ESBR und Epichlorohydrin bevorzugt sind,
oder
- die Kautschukschicht (2)
- SBR und/oder PDMS umfasst, bevorzugt SBR umfasst,
oder
- hauptschlich oder gänzlich aus SBR oder PDMS besteht, bevorzugt ausschließlich aus SBR besteht.

8. Reifen nach einem der vorangehenden Ansprüche, wobei die Vorrichtung dazu geeignet ist,
- mindestens einen Energiespeicher (10), wie eine Batterie oder einen Akkumulator, aufzuladen, wobei der eine Energiespeicher (10) an dem Reifen (5) oder an einer Felge (11) zum Aufziehen des Reifens (5) angebracht werden kann, und/oder
- die Vorrichtung dazu ausgelegt ist, eine elektrische Spannung zwischen den Schichten (1, 2) durch Variation des Druckes auf die Schichten (1, 2) zu erzeugen.

9. Reifen nach einem der vorangehenden Ansprüche, wobei die an die Elektrodenschicht (1) anliegende Oberfläche der Kautschukschicht (2) eine Oberflächenrauheit Rₐ im Bereich von 0,1 µm bis 500 µm aufweist, bevorzugt im Bereich von 0,5 bis 100 µm, besonders bevorzugt im Bereich von 1 bis 50 µm, ganz besonders bevorzugt im Bereich von 1 bis 5 µm, gemessen nach DIN EN ISO 4288:1998.

10. Reifen nach einem der vorangehenden Ansprüche, wobei die Kautschukschicht (2) eine Schichtdicke im Bereich im Bereich von 0,1 bis 200 mm aufweist, bevorzugt im Bereich von 1 mm bis 150 mm oder von 5 bis 100 mm, besonders bevorzugt im Bereich von 10 bis 90 mm.

11. Reifen nach einem der vorangehenden Ansprüche, wobei die Mittelachse (7) der Vorrichtung (19) in radialer Richtung (16) oder in axiale Richtung (14) verläuft.

12. Reifen nach einem der vorangehenden Ansprüche, wobei die Elektrodenschicht (1) oder jeder Elektrodenschichtabschnitt (1a, 1b, 1c, 1d) der Vorrichtung (6) eine Stromversorgungsschaltung (13) zur Verbindung mit den Kontaktierungen (8) zur Abnahme einer zwischen den Schichten (1, 2) vorliegenden elektrischen Spannung aufweist, wobei die Stromversorgungsschaltung (13)
- eine zwischen den Schichten (1, 2) erzeugte elektrische Spannung aufnehmen kann
und
- eine Gleichrichtereinheit (14), bevorzugt eine Gleichrichtereinheit (14) bestehend aus einem mit der Elektrodenschicht (1) oder mit einem Elektrodenschichtabschnitt (1a, 1b, 1c, 1d) verbundenen Zweiweg-Gleichrichter mit einer Kontaktierung für eine Felge und mit einem Energiespeicher (10) zur Zwischenspeicherung der Energie einer zwischen einer Felge und der Elektrodenschicht (1) oder der Elektrodenschichtabschnitt (1a, 1b, 1c, 1d) erzeugten elektrischen Spannung, aufweist.

13. Verwendung eines Reifens (5) wie in einem der Ansprüche 1 bis 12 definiert zum Aufladen mindestens eines Energiespeichers (10), wie einer Batterie oder eines Akkumulators, während des Fahrens eines Fahrzeuges mit dem Reifen (5), wobei der eine Energiespeicher (10) an dem Reifen (5) oder an einer Felge (11) angebracht ist, wobei der Energiespeicher (10) bevorzugt an dem Reifen (5) angebracht ist.

## Claims

1. Tyre comprising a device (6), wherein the device (6) comprises an electrode layer (1) and a rubber layer (2) and contacts (8) provided on the layers (1, 2) for collecting an electrical voltage produced between the layers (1, 2) and the device is an integral constituent of the tyre,
wherein
a) the electrode layer (1) comprises an electrode material having an electrical conductivity of at least 0.001 S/m at 20°C,
b) the rubber layer (2) comprises rubber having an electrical conductivity of less than 10⁻⁵ S/m at 20°C,
wherein
- the electrode layer (1) and the rubber layer (2) are arranged one atop the other
and
- the surface of the rubber layer (2) opposite the electrode layer (1) comprises at least a portion of the ground contact surface (3) or at least a portion of the rim contact surface (4) of the tyre (5),
**characterized in that**,
the electrode material of the electrode layer (1) or the electrode layer sections a rubber comprising NR, IR, ENR, BR, SBR, SSBR, PDMS, ESBR and epichlorohydrin or mixtures thereof and comprises at least one filler, wherein the one filler is carbon black.

2. Tyre according to Claim 1, wherein the device is suitable therefor, wherein the rubber of the rubber layer (2) has a relative permittivity in the range from 1 to 5, preferably in the range from 2.25 to 4, particularly preferably from 2.44 to 3.5, especially particularly preferably in the range from 2.45 to 3, most preferably in the range from 2.47 to 2.80, measured at 60°C and a frequency of 10 Hz.

3. Tyre according to either of the preceding claims, wherein the surface of the rubber layer (2) opposite the electrode layer (1) in its entirety mainly forms the ground contact surface or in its entirety forms the entire ground contact surface (3) of the tyre (5) and/or the electrode layer (1) comprises at least two, preferably four, electrode layer sections electrically isolated from one another (1a, 1b, 1c, 1d).

4. Tyre according to any one of the preceding claims, wherein the electrode layer (1) or respective pairs of opposite electrode layer sections (1a, 1b, 1c, 1d) or each electrode layer section (1a, 1b, 1c, 1d) of the device (6) has a power supply circuit (13) for connection to the contacts (8) for collecting an electrical voltage present between the layers (1, 2), wherein the power supply circuit (13)
- can receive an electrical voltage produced between the layers (1, 2)
and
- comprises a rectifier unit (14), wherein
- a rectifier unit (14) consisting of a two-way rectifier having a ground and having an energy storage means (10) for intermediate storage of the energy of an electrical voltage present between the layers (1, 2)
or
- a rectifier unit (14) consisting of a two-way rectifier connecting the two opposite electrode layer sections (1a, 1b, 1c, 1d) having an energy storage means (10) for intermediate storage of the energy of an electrical voltage present between the layers (1, 2).

5. Tyre according to any of the preceding claims, wherein
- the rubber layer (2) comprises at least one filler
and
- the at least one filler of the rubber layer (2)
- is silica, wherein the at least one filler is present in a total amount in the range from 0.1 phr to 50 phr, preferably in the range from 1 phr to 30 phr, particularly preferably in the range from 2 phr to 25 phr, very particularly preferably in the range from 3 phr to 20 phr, in each case based on the total mass of the rubber layer (2) of the device (6),
and/or
- is carbon black, and preferably in a total amount in the range from 0.1 phr to 60 phr, preferably in the range from 1 phr to 30 phr, particularly preferably in the range from 2 phr to 20 phr, in each case based on the total mass of the rubber layer (2) of the device (6).

6. Tyre according to Claim 1, wherein the carbon black in the electrode layer (1) or in each electrode section (1a, 1b, 1c, 1d) is present in a total amount in the range from 1 phr to 200 phr, preferably in the range from 5 phr to 190 phr, particularly preferably in the range from 5 phr to 150, in each case based on the total mass of the rubber of the electrode layer (1) or of the respective electrode section.

7. Tyre according to any of the preceding claims, wherein
- the one rubber or one of the two or more rubbers of the rubber layer (2) is selected from the group consisting of rubber, polyester, polyethylene, polyethylene terephthalates, polypropylene, polystyrene, polychlorobutadiene, polyacrylonitrile, polyvinyl chloride, poly(organo)siloxanes, vulcanized rubber particles, fillers and mixtures thereof, wherein preferred rubbers are the rubbers ENR, BR, SBR, SSBR, PDMS, ESBR and epichlorohydrin,
or
- the rubber layer (2) comprises
- SBR and/or PDMS, preferably SBR,
or
- mainly or entirely consists of SBR or PDMS, preferably exclusively consists of SBR.

8. Tyre according to any of the preceding claims, wherein the device is suitable for
- charging at least one energy storage means (10), such as a battery or an accumulator, wherein the one energy storage means (10) may be mounted to the tyre (5) or to a rim (11) for mounting the tyre (5),
and/or
- the device is designed to produce an electrical voltage between the layers (1, 2) through variation of pressure on the layers (1, 2).

9. Tyre according to any of the preceding claims, wherein the surface of the rubber layer (2) opposite the electrode layer (1) has a surface roughness Rₐ in the range from 0.1 µm to 500 µm, preferably in the range from 0.5 to 100 µm, particularly preferably in the range from 1 to 50 µm, very particularly preferably in the range from 1 to 5 µm, measured according to DIN EN ISO 4288:1998.

10. Tyre according to any of the preceding claims, wherein the rubber layer (2) has a layer thickness in the range in the range from 0.1 to 200 mm, preferably in the range from 1 mm to 150 mm or from 5 to 100 mm, particularly preferably in the range from 10 to 90 mm.

11. Tyre according to any of the preceding claims, wherein the central axis (7) of the device (19) extends in the radial direction (16) or in the axial direction (14).

12. Tyre according to any one of the preceding claims, wherein the electrode layer (1) or each electrode layer section (1a, 1b, 1c, 1d) of the device (6) has a power supply circuit (13) for connection to the contacts (8) for collecting an electrical voltage present between the layers (1, 2), wherein the power supply circuit (13)
- can receive an electrical voltage produced between the layers (1, 2)
and
- a rectifier unit (14), preferably a rectifier unit (14) consisting of a two-way rectifier connected to the electrode layer (1) or to an electrode layer section (1a, 1b, 1c, 1d) having a contact for a rim and having an energy storage means (10) for intermediate storage of the energy of an electrical voltage produced between a rim and the electrode layer (1) or the electrode layer section (1a, 1b, 1c, 1d).

13. Use of a tyre (5) as defined in any one of Claims 1 to 12 for charging at least one energy storage means (10), such as a battery or an accumulator, during driving of a vehicle comprising the tyre (5), wherein the one energy storage means (10) is mounted to the tyre (5) or to a rim (11), wherein the energy storage means (10) is preferably mounted to the tyre (5).

## Revendications

1. Pneumatique comprenant un dispositif (6), dans lequel le dispositif (6) présente une couche d'électrode (1) et une couche de caoutchouc (2) ainsi que des contacts (8) prévus entre les couches (1, 2) pour la réception d'une tension électrique générée entre les couches (1, 2), le dispositif faisant partie intégrante du pneumatique,
dans lequel
a) la couche d'électrode (1) comprend un matériau d'électrode présentant une conductivité électrique d'au moins 0,001 S/m à 20°C,
b) la couche de caoutchouc (2) comprend du caoutchouc présentant une conductivité électrique inférieure à 10⁻⁵ S/m à 20°C,
dans lequel
- la couche d'électrode (1) et la couche de caoutchouc (2) sont agencées l'une au-dessus de l'autre
et
- la surface de la couche de caoutchouc (2) opposée à la couche d'électrode (1) comprend au moins une partie de la surface de contact (3) avec le sol ou au moins une partie de la surface de contact (4) avec la jante du pneumatique (5),
**caractérisé en ce que**
le matériau d'électrode de la couche d'électrode (1) ou des sections de couche d'électrode comprend un caoutchouc comprenant NR, IR, ENR, BR, SBR, SSBR, PDMS, ESBR et épichlorhydrine ou leurs mélanges et au moins une charge, ladite une charge étant la suie.

2. Pneumatique selon la revendication 1, dans lequel le dispositif convient pour celui-ci, le caoutchouc de la couche de caoutchouc (2) présentant une permissivité relative dans la plage de 1 à 5, de préférence dans la plage de 2,25 à 4, de manière particulièrement préférée de 2,44 à 3,5, de manière tout particulièrement préférée dans la plage de 2,45 à 3, dans une mesure particulièrement préférentielle dans la plage de 2,47 à 2,80, mesurée à 60°C et à une fréquence de 10 Hz.

3. Pneumatique selon l'une des revendications précédentes, dans lequel la surface de la couche de caoutchouc (2) opposée à la couche d'électrode (1) forme, sur toute sa périphérie, principalement la surface de contact avec le sol ou, sur toute sa périphérie, la surface de contact (3) totale avec le sol du pneumatique (5) et/ou la couche d'électrode (1) comprend au moins deux, de préférence quatre, sections (1a, 1b, 1c, 1d) de couche d'électrode électriquement isolées les unes par rapport aux autres.

4. Pneumatique selon l'une des revendications précédentes, dans lequel la couche d'électrode (1) ou à chaque fois deux sections (1a, 1b, 1c, 1d) de couche d'électrode opposées ou chaque section (1a, 1b, 1c, 1d) de couche d'électrode du dispositif (6) présente(nt) un circuit d'alimentation (13) pour la connexion avec les contacts (8) pour la réception d'une tension électrique existant entre les couches (1, 2), le circuit d'alimentation (13)
- pouvant recevoir une tension électrique générée entre les couches (1, 2) et
- présentant une unité de redressement (14), dans laquelle
- une unité de redressement (14) constituée par un redresseur à deux voies présentant une mise à la terre et un accumulateur d'énergie (10) pour l'accumulation intermédiaire de l'énergie d'une tension électrique existant entre les couches (1, 2)
ou
- une unité de redressement (14) constituée par un redresseur à deux voies reliant les deux sections (1a, 1b, 1c, 1d) de couche d'électrode opposées présentant un accumulateur d'énergie (10) pour l'accumulation intermédiaire de l'énergie d'une tension électrique existant entre les couches (1, 2).

5. Pneumatique selon l'une des revendications précédentes, dans lequel
- la couche de caoutchouc (2) comprend au moins une charge
et
- ladite au moins une charge de la couche de caoutchouc (2) est
- de la silice, ladite au moins une charge étant présente en une quantité totale dans la plage de 0,1 pcc à 50 pcc, de préférence dans la plage de 1 pcc à 30 pcc, de manière particulièrement préférée dans la plage de 2 pcc à 25 pcc, de manière tout particulièrement préférée dans la plage de 3 pcc à 20 pcc, à chaque fois par rapport à la masse total de la couche de caoutchouc (2) du dispositif (6), et/ou
- de la suie et de préférence en une quantité totale dans la plage de 0,1 pcc à 60 pcc, de préférence dans la plage de 1 pcc à 30 pcc, de manière particulièrement préférée dans la plage de 2 pcc à 20 pcc, à chaque fois par rapport à la masse totale de la couche de caoutchouc (2) du dispositif (6).

6. Pneumatique selon la revendication 1, dans lequel la suie dans la couche d'électrode (1) ou dans chaque section (1a, 1b, 1c, 1d) d'électrode est présente en une quantité totale dans la plage de 1 pcc à 200 pcc, de préférence dans la plage de 5 ppc à 190 pcc, de manière particulièrement préférée dans la plage de 5 pcc à 150 pcc, à chaque fois par rapport à la quantité totale du caoutchouc de la couche d'électrode (1) ou de la section d'électrode respective.

7. Pneumatique selon l'une des revendications précédentes, dans lequel
- ledit un ou l'un desdits plusieurs caoutchoucs de la couche de caoutchouc (2) est choisi dans le groupe constitué par le caoutchouc, le polyester, le polyéthylène, le poly(téréphtalate d'éthylène), le polypropylène, le polystyrène, le polychlorobutadiène, le polyacrylonitrile, le poly(chlorure de vinyle), les poly(organo)siloxanes, les particules de caoutchouc vulcanisé, les charges et leurs mélanges, les caoutchoucs ENR, BR, SBR, SSBR, PDMS, ESBR et épichlorhydrine étant préférés comme caoutchouc,
ou
- la couche de caoutchouc (2)
- comprend du SBR et/ou du PDMS, de préférence du SBR,
ou
- est principalement ou totalement constituée de SBR ou de PDMS, de préférence exclusivement de SBR.

8. Pneumatique selon l'une des revendications précédentes, dans lequel le dispositif convient pour
- charger au moins un accumulateur d'énergie (10), tel qu'une batterie ou un accumulateur, ledit un accumulateur d'énergie (10) pouvant être disposé au niveau du pneumatique (5) ou d'une jante (11) pour le montage du pneumatique (5)
et/ou
- le dispositif est conçu pour générer une tension électrique entre les couches (1, 2) par variation de la pression sur les couches (1, 2).

9. Pneumatique selon l'une des revendications précédentes, dans lequel la surface de la couche de caoutchouc (2) adjacente à la couche d'électrode (1) présente une rugosité de surface Rₐ dans la plage de 0,1 µm à 500 µm, de préférence dans la plage de 0,5 à 100 µm, de manière particulièrement préférée dans la plage de 1 à 50 µm, de manière tout particulièrement préférée dans la plage de 1 à 5 µm, mesurée selon la norme DIN EN ISO 4288:1998.

10. Pneumatique selon l'une des revendications précédentes, dans lequel la couche de caoutchouc (2) présente une épaisseur de couche dans la plage de 0,1 à 200 mm, de préférence dans la plage de 1 mm à 150 mm ou de 5 à 100 mm, de manière particulièrement préférée dans la plage de 10 à 90 mm.

11. Pneumatique selon l'une des revendications précédentes, dans lequel l'axe central (7) du dispositif (19) s'étend dans la direction radiale (16) ou dans la direction axiale (14).

12. Pneumatique selon l'une des revendications précédentes, dans lequel la couche d'électrode (1) ou chaque section (1a, 1b, 1c, 1d) de couche d'électrode du dispositif (6) présente un circuit d'alimentation (13) pour la connexion avec les contacts (8) pour la réception d'une tension électrique existant entre les couches (1, 2), le circuit d'alimentation (13)
- pouvant recevoir une tension électrique générée entre les couches (1, 2) et
- présentant une unité de redressement (14), de préférence une unité de redressement (14) constituée par un redresseur à deux voies relié à la couche électrode (1) ou à une section (1a, 1b, 1c, 1d) de couche d'électrode avec un contact pour une jante et un accumulateur d'énergie (10) pour l'accumulation intermédiaire de l'énergie d'une tension électrique générée entre une jante et la couche d'électrode (1) ou la section (1a, 1b, 1c, 1d) de couche d'électrode.

13. Utilisation d'un pneumatique (5) tel que défini dans l'une des revendications 1 à 12 pour la charge d'au moins un accumulateur d'énergie (10), tel qu'une batterie ou un accumulateur, pendant le déplacement d'un véhicule présentant le pneumatique (5), ledit un accumulateur d'énergie (10) étant disposé au niveau du pneumatique (5) ou d'une jante (11), l'accumulateur d'énergie (10) étant de préférence disposé au niveau du pneumatique (5).
